# NEUE EUROPÄISCHE PATENTSCHRIFT

(11) **EP 1 641 656 B2**
(45) Veröffentlichungstag und Bekanntmachung des Hinweises auf die Entscheidung über den Einspruch: **16.02.2011**
(45) Hinweis auf die Patenterteilung: 08.08.2007
(21) Anmeldenummer: 05715041.9
(22) Anmeldetag: 24.02.2005
(51) Int. Cl.: B60R 21/20, B62D 1/10, B62D 1/16, H01R 39/00

(54) **VORRICHTUNG ZUR LAGERUNG EINES MODULS AM LENKRAD EINES KRAFTFAHRZEUGS**
DEVICE FOR MOUNTING A MODULE ON THE STEERING WHEEL OF A MOTOR VEHICLE
DISPOSITIF DE POSITIONNEMENT D'UN MODULE SUR LE VOLANT D'UN VEHICULE AUTOMOBILE

(30) Priorität: 01.03.2004 DE 102004010469; 30.09.2004 DE 102004048837
(43) Veröffentlichungstag der Anmeldung: 05.04.2006
(73) Patentinhaber: Takata-Petri AG, 63743 Aschaffenburg (DE)
(72) Erfinder: PRADEL, Andreas, 10367 Berlin (DE); PROST-FIN, Marc, 13187 Berlin (DE)
(74) Vertreter: Baumgärtel, Gunnar
(86) Internationale Anmeldenummer: PCT/DE2005/000345
(87) Internationale Veröffentlichungsnummer: WO 2005/085016

(56) Entgegenhaltungen:
- EP-A2- 1 500 561
- DE-A1- 2 625 184
- DE-A1- 19 942 818
- US-A- 3 525 536
- US-A- 4 674 352
- US-A- 5 010 784
- US-A- 6 145 405

## Beschreibung

Die Erfindung betrifft eine Vorrichtung zur Lagerung eines Moduls am Lenkrad eines Kraftfahrzeugs gemäß dem Oberbegriff des Anspruchs 1.

Eine solche Vorrichtung dient zur Lagerung eines Moduls, insbesondere eines Gassackmoduls, an einem drehbaren Lenkrad eines Kraftfahrzeugs derart, dass die Winkellage des Moduls bei einer Drehung des Lenkrads konstant bleibt, um z. B. im Crash-Fall stets eine optimale, reproduzierbare Positionierung eines aufblasbaren, aus dem Modul heraus entfaltbaren Gassacks zu gewährleisten. Die Vorrichtung weist ein Getriebe auf, umfassend ein erstes Getriebeelement, welches mit einem fahrzeugfesten Teil des Kraftfahrzeugs drehfest, d.h. ortsfest, verbunden ist; ein zweites Getriebeelement, welches mit dem Modul drehfest verbunden und also gemeinsam mit diesem drehbar ist; sowie eine durch Drehung des Lenkrads betätigbare Getriebebaugruppe, über die das erste Getriebeelement mit dem zweiten Getriebeelement derart gekoppelt ist, dass eine Drehung des Lenkrads relativ zum ortsfesten ersten Getriebeelement in eine beliebige Richtung eine Drehung des mit dem zweiten Getriebeelement verbundenen Moduls in entgegengesetzter Richtung bewirkt, vergleiche DE 26 25 184 A1.

Weiterhin ist eine erste elektrische Kontakteinheit vorgesehen, die mit dem ersten Getriebeelement zu einer Baugruppe zusammengefasst ist und gemeinsam mit diesem mit dem fahrzeugfesten Teil in fester Verbindung steht, sowie eine zweite elektrischer Kontakteinheit, die mit dem zweiten Getriebeelement zu einer Baugruppe zusammengefasst ist und gemeinsam mit diesem mit dem Modul in fester Verbindung steht, wobei die beiden Kontakteinheiten über elektrische Verbindungsmittel miteinander in Verbindung stehen. Eine solche Vorrichtung ist aus der US-A 4,604,912 bekannt.

Weiterhin ist aus der US-A 6,145,402 eine Lenkradbaugruppe für ein Kraftfahrzeug mit einem Airbagmodul bekannt, bei der elektrische Stecker zur Verbindung elektrischer Komponenten genutzt werden.

Eine gattungsgemäße Vorrichtung ist aus der US-A 4,674,352 bekannt.

Der Erfindung liegt das Problem zugrunde, eine Vorrichtung der eingangs genannten Art zu schaffen, die sich einen geringen Integrationsaufwand bei der Zusammenfassung unterschiedlicher Baugruppen auszeichnet.

Dieses Problem wird erfindungsgemäß durch die in Anspruch 1 genannten Merkmale gelöst.

Danach wird jede der beiden elektrischen Kontakteinheiten durch einen Stator, einen bezüglich des Stators (um die Lenkachse) drehbaren Rotor und bevorzugt einen den Stator mit dem Rotor elektrisch verbindenden, bezüglich der Rotor-Statorbaugruppe auf-und abwickelbaren, als Wickelfeder bezeichneten flexiblen Leiter gebildet, wie etwa aus der DE 196 16 234 A1 und der DE 197 27 856 A1 bekannt. Dabei ist der Stator der ersten elektrischen Kontakteinheit mit dem ersten Getriebeelement verbunden oder einstückig mit diesem geformt und gemeinsam mit diesem an einem fahrzeugfesten Teil festgelegt und der Stator der zweiten elektrischen Kontakteinheit mit dem zweiten Getriebeelement verbunden oder einstückig mit diesem geformt und gemeinsam mit diesem an dem Modul festgelegt, also gemeinsam mit dem Modul bezüglich des Lenkrades verdrehbar. Der Rotor der jeweiligen Kontakteinheit ist demgegenüber drehfest am Lenkrad fixiert, also jeweils gemeinsam mit diesem drehbar.

Die die erste elektrische Kontakteinheit und das erste Getriebeelement umfassende Baugruppe sowie die die zweite elektrische Kontakteinheit und das zweite Getriebeelement umfassende Baugruppe sind dabei als außerhalb des Lenkrades komplett vormontierbare und in fertig montiertem Zustand an einem fahrzeugfesten Teil bzw. am Modul anordenbare Baugruppen ausgebildet, durch Integration (feste Verbindung) der jeweiligen Kontakteinheit und des jeweiligen Getriebeelementes.

In einer Ausführungsform der erfindungsgemäßen Vorrichtung ist zur Bildung eines Planetengetriebes das erste Getriebeelement als erstes zentrales Zahnrad und das zweite Getriebeelement als zweites zentrales Zahnrad ausgebildet. Dabei sind das erste Getriebeelement und das zweite Getriebeelement bevorzugt koaxial zur Lenkachse angeordnet.

Die Getriebebaugruppe zur Kopplung des ersten Getriebeelementes mit dem zweiten Getriebeelement weist eine parallel zur Lenkachse verlaufende, bei Drehung des Lenkrades mitnehmbare und um ihre Längsachse drehbare Welle auf. Bei Ausbildung des ersten und zweiten Getriebeelementes als erstes und zweites zentrales Zahnrad ist das erste zentrale Zahnrad mit dem zweiten zentralen Zahnrad über die parallel zur Lenkachse verlaufende Welle gekoppelt, indem ein am einem Ende der Welle angeordnetes erstes peripheres Zahnrad in das erste zentrale Zahnrad eingreift und ein am anderen Ende der Welle angeordnetes zweites peripheres Zahnrad in das zweite zentrale Zahnrad eingreift. Die Welle kann zu diesem Zweck durch eine Öffnung im Lenkradgrundkörper des Lenkrads geführt werden.

Bei einer Drehung des Lenkrads wird die durch eine Öffnung im Lenkradgrundkörper des Lenkrads geführt Welle in Drehrichtung mitgenommen und das erste periphere Zahnrad rollt auf dem fahrzeugfesten ersten zentralen Zahnrad ab. Die hierdurch erzeugte Drehbewegung der Welle um ihre Achse wird mittels des zweiten peripheren Zahnrades, das eine zur Drehbewegung des ersten peripheren Zahnrades identische (richtungsgleiche) Bewegung ausführt, auf das zweite zentrale Zahnrad derart übertragen, dass die Drehbewegung des zweiten zentralen Zahnrades zur Drehbewegung der peripheren Zahnräder und damit auch des Lenkrades gegenläufig ist (Umkehrgetriebe). Im Ergebnis wird somit das mit dem zweiten zentralen Zahnrad verbundene Modul relativ zu dem Lenkrad in entgegengesetzter Richtung gedreht, so dass die Winkellage des Moduls im fahrzeugfesten Koordinatensystem konstant bleibt.

Dabei sind das erste und zweite zentrale Zahnrad sowie das erste und zweite periphere Zahnrad hinsichtlich Zähnezahl und Abmessung derart ausgebildet, dass der Drehwinkel des Lenkrads in Bezug auf das erste Getriebeelement betragsmäßig im Wesentlichen identisch ist mit dem Drehwinkel des Moduls in entgegengesetzter Richtung. Eine Drehung des Lenkrads in eine Richtung bewirkt somit eine Drehung des am Lenkrad gelagerten Moduls relativ zu dem Lenkrad in die entgegengesetzte Richtung, und zwar um denselben Drehwinkel, so dass die Winkellage des drehbar am Lenkrad gelagerten Modules in einem fahrzeugfesten Koordinatensystem konstant bleibt.

Die erste elektrische Kontakteinheit ist bei einer bevorzugten Ausführungsform der Erfindung im Bereich einer Nabe des Lenkrads (z.B. über ihren Stator) fahrzeugfest angeordnet. Dazu kann die erste Kontakteinheit beispielsweise so ausgeführt sein, dass sie bei der Montage des Lenkrads auf die Nabe des Lenkrads aufsteckbar ist und hierdurch, beispielsweise über ihren (relativ zum Stator verdrehbaren) Rotor, im Bereich der Nabe zugleich auch mit dem Lenkrad verbunden ist.

Die zweite elektrische Kontakteinheit ist auf der Seite des Lenkradgrundkörpers angeordnet, die der Nabe des Lenkrads gegenüber liegt und dem Modul zugewandt ist, und dort, z.B. über ihren Stator, fest mit dem Modul verbunden. Ein Rotor der zweiten Kontakteinheit ist wiederum mit dem Lenkrad drehfest verbunden.

Die elektrische Verbindung der ersten elektrischen Kontakteinheit mit der zweiten elektrischen Kontakteinheit erfolgt vorteilhafterweise durch eine zweite Öffnung im Lenkradgrundkörper des Lenkrads, und zwar insbesondere über eine elektrische Steckverbindung zwischen Stator und Rotor oder einen flexiblen Leiter. Hierdurch sind am Modul angeordneten elektrische Elemente, wie z.B. Bedienelemente, die von einem Fahrzeugführer zur Auslösung verschiedener Funktionen im Fahrzeug bedienbar sind, elektrisch mit dem Bordnetz eines Kraftfahrzeugs verbindbar. Weiterhin kann ein Zündelement vorgesehen, mit dem ein Gasgenerator eines Gassackmodules im Crash-Fall zum Aufblasen des Gassackes zündbar ist.

Weitere Einzelheiten und Vorteile der Erfindung werden nachfolgend anhand von Figuren dargestellt.

### Es zeigen:

- Figur 1: eine Explosionsdarstellung eines Lenkrades mit einer Vorrichtung zur Lagerung eines Moduls am Lenkrad;
- Figur 2: einen Querschnitt durch ein Lenkrad gemäß Figur 1;
- Figur 3: eine perspektivische Schnittdarstellung eines Lenkrades gemäß Figur 1;
- Figur 4: ein Planetengetriebe, über das ein Modul am Lenkrad gelagert ist.

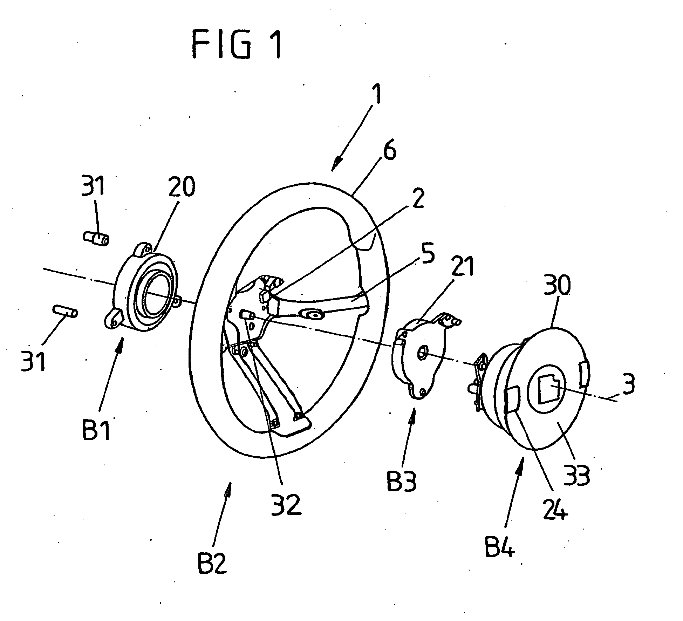

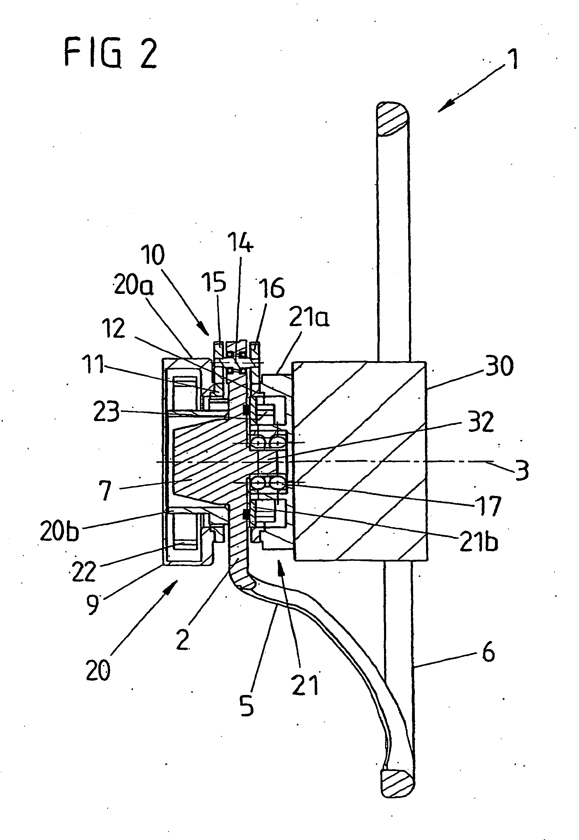

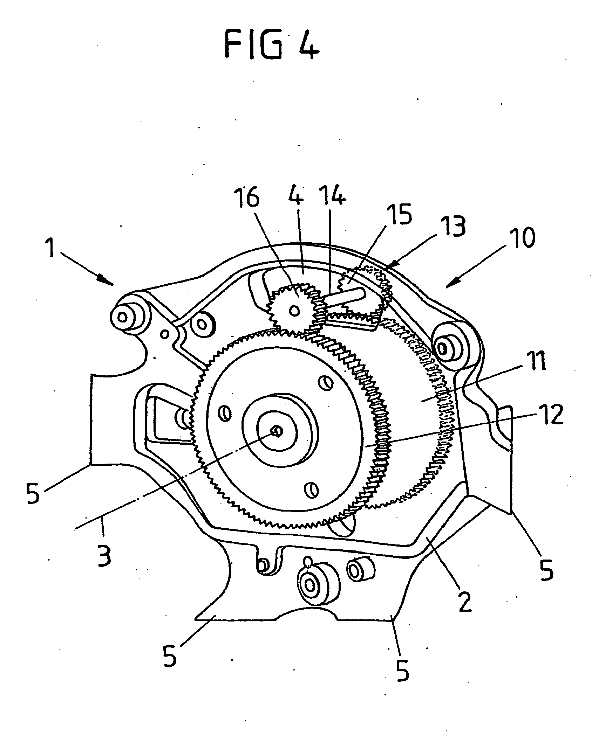

Figur 1 zeigt eine Explosionsdarstellung eines Lenkrades 1 für ein Kraftfahrzeug mit einer Vorrichtung zur Lagerung eines Moduls 30 am Lenkrad 1, wobei die gesamte Anordnung im Wesentlichen aus vier Baugruppen B1, B2, B3, B4 zusammensetzbar ist. Diese werden nachfolgend unter ergänzender Bezugnahmen auf die Figuren 2 bis 4 näher beschrieben.

Eine erste Baugruppe B1 umfasst eine erste elektrische Kontakteinheit 20, bestehend aus einem ersten Stator 20a, einem hierzu (um die Lenkachse) verdrehbaren ersten Rotor 20b und einer als erste Wickelfeder 22 ausgebildeten Leiterfolie, die eine elektrische Anbindung des Rotors 20b über den Stator 20a an des elektrische Netz des Kraftfahrzeugs ermöglicht. Weiterhin weist die erste Baugruppe B1 ein mit dem ersten Stator 20a verbundenes oder einstückig an diesem angeformtes erstes zentrales Zahnrad 11 (Sonnenrad) auf, das Teil eines als Umkehrgetriebe dienenden Planetengetriebes 10 ist. Diese erste Baugruppe B1 wird über den ersten Stator 20a durch Befestigungsmittel 31 mit einem fahrzeugfesten Teil des Kraftfahrzeugs verbunden, etwa mit einem Gehäuse 9 der Lenksäule oder mit der Innenverkleidung des Fahrzeugs, wodurch das erstes zentrales Zahnrad 11 fahrzeugfest fixiert ist.

Eine zweite Baugruppe B2 besteht im Wesentlichen aus dem Lenkrad 1, das einen Lenkradgrundkörper in Form eines Lenkradbodens 2 aufweist, der über vier vom Lenkradboden 2 abstehende Speichen 5 mit dem Lenkradkranz 6 verbunden ist. Die erste Baugruppe B1 ist im Bereich der Nabe 7 über den ersten Rotor 20b mit dem Lenkrad 1 verbunden, indem der erste Rotor 20b drehfest am Lenkrad 1 fixiert ist. Hierdurch ist das Lenkrad 1 gemeinsam mit dem ersten Rotor 20b gegenüber dem Stator 20a und dem zentralen Zahnrad 11 der ersten Baugruppe B1 verdrehbar.

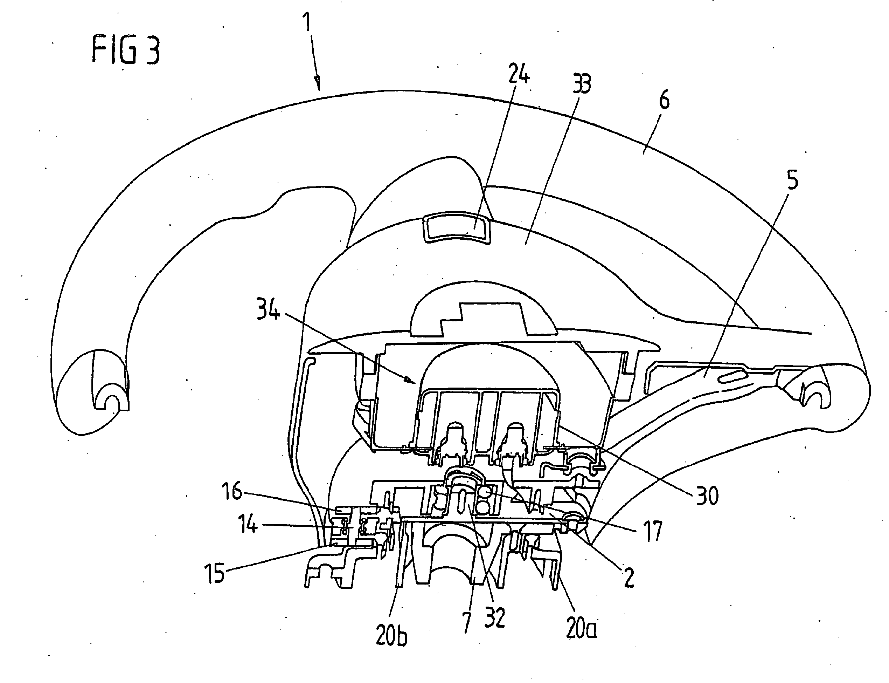

Eine dritte Baugruppe B3 umfasst eine zweite elektrische Kontakteinheit 21, bestehend aus einem zweiten Stator 21a , einem hierzu (um die Lenkachse) verdrehbaren zweiten Rotor 21 b und einer als zweite Wickelfeder 23 ausgebildeten Leiterfolie, die den zweiten Rotor 21 b mit dem zweiten Stator 21 a elektrisch verbindet und so eine elektrische Anbindung des Moduls 30 an des elektrische Netz des Kraftfahrzeugs ermöglicht. Weiterhin umfasst die dritte Baugruppe B3 ein mit dem zweiten Stator 21 a verbundenes oder mit diesem einteilig ausgeführtes zweites zentrales Zahnrad 12. Durch Aufsetzen des Stators 21 a der dritten Baugruppe B3 auf einen am Lenkradboden 2 des Lenkrads 1 ausgebildeten oder befestigten Zapfen bzw. Stift 32 wird dieser mittels eines an der dritten Baugruppe B3 angeordneten Kugellagers 17 drehbar an dem Lenkrad 1 gelagert, wohingegen der zweite Rotor 21 b drehfest mit dem Lenkrad 1 verbunden wird. In Figur 3 ist dabei, in Abweichung von Figur 2, angedeutet, dass der Zapfen bzw. Stift 32 auch am zweiten Rotor 21 b angeordnet sein kann.

Die erste und zweite Wickelfeder 22, 23 werden beim Zusammenfügen der ersten, zweiten und dritten Baugruppe B1, B2, B3 über die beiden Rotoren 20b, 21 b durch eine zweite Öffnung im Lenkradboden 2 hindurch (z.B. mittels einer elektrischen Leitung oder mittels elektrischer Steckerelemente) elektrisch miteinander verbunden. Somit ist die dritte Baugruppe B3 über die erste Baugruppe B1 mit dem elektrischen Netz des Kraftfahrzeugs verbunden.

Eine vierte Baugruppe B4 weist ein Modul 30 in Form eines Gassackmodules 30 auf, dessen Gassack in einem Crash-Fall zum Schutz des Fahrzeugführers aufblasbar ist. Dieses Modul 30 wird mit geeigneten Befestigungsmitteln drehfest mit dem Stator 21a der zweiten Kontakteinheit 21 verbunden. Die vierte Baugruppe B4 ist fahrerseitig mit einer Abdeckung 33 überdeckt, an der vom Fahrzeugführer betätigbare elektrische Bedienelemente 24 angeordnet sind. Diese elektrischen Bedienelemente 24 sind über die Wickelfedern 22, 23 mit dem elektrischen Netz des Kraftfahrzeugs verbunden. Unterhalb der Abdeckung 33 des Moduls 30 ist eine Gassackvorrichtung 34 mit dem im Crashfall aufblasbaren und entfaltbaren Gassack angeordnet.

Beim Zusammensetzen der beschriebenen Baugruppen B1, B2, B3, B4 wird das koaxial zur Lenkachse 3 angeordnete erste zentrale Zahnrad 11 (Sonnenrad) mit dem ebenfalls koaxial zur Lenkachse 3 angeordneten zweiten zentralen Zahnrad 12 (Sonnenrad) mittels einer durch eine erste Öffnung 4 im Lenkradboden 2 geführte Welle 14 gekoppelt. Dies erfolgt über ein an einem ersten Ende der Welle 14 angeordnetes erstes peripheres Zahnrad 15 (Planetenrad), das in das erste zentrale Zahnrad 11 der ersten Baugruppe B1 eingreift, d.h. mit diesem kämmt. Ein am zweiten Ende der Welle 14 angeordnetes zweites peripheres Zahnrad16 (Planetenrad) greift in das zweite zentrale Zahnrad 12 der dritten Baugruppe B3 ein und kämmt mit diesem. Somit bilden das erste zentrale Zahnrad 11, das zweite zentrale Zahnrad 12, das erste periphere Zahnrad 15 und das zweite periphere Zahnrad 16 ein Planetengetriebe 10.

Zur weiteren Erhöhung des Integrationsgrades kann jene Welle 14 auch am (mit dem Lenkrad 1 verbundenen) Rotor 21 b der zweiten Kontakteinheit 21 angeordnet sein. Maßgeblich ist eine derartige Wirkverbindung zwischen dem Lenkrad 1 und der Welle 14, dass letztere bei einer Drehung des Lenkrades 1 mitgenommen wird und das erste periphere Zahnrad 15 auf dem zugeordneten zentralen Zahnrad 11 abrollen kann.

Da das erste zentrale Zahnrad 11 der erste Baugruppe B1 fahrzeugfest angeordnet ist und das zweite zentrale Zahnrad 12, das mit dem ersten zentralen Zahnrad 11 über die peripheren Zahnräder 15, 16 gekoppelt ist, zusammen mit dem Modul 30 bezüglich des Lenkrades 1 verdrehbar ist, kann eine durch den Fahrzeugführer ausgeführte Drehung des Lenkrads 1, wie nachfolgend noch ausführlich dargestellt werden wird, in eine gegenläufige Drehung des Moduls 30 der vierten Baugruppe B4 umgesetzt werden, d.h. das Planetengetriebe wirkt als Umkehrgetriebe, mit dem eine Drehung des Lenkrades entlang einer ersten Richtung in eine entgegengesetzte Drehung des Moduls 30 bezüglich des Lenkrades 1 umsetzbar ist.

Im Folgenden wird insbesondere Bezug genommen auf die detailliertere Darstellung der vorbeschriebenen Anordnung in den Figuren 2 bis 4.

Die Figuren 2 bis 4 zeigen in größerem Detail das drehbar gelagerte Lenkrad 1, das einen Lenkradgrundkörper in Form eines Lenkradbodens 2 aufweist. Vom Lenkradboden 2 stehen vier Lenkradspeichen 5 ab, die den Lenkradboden 2 mit einem Lenkradkranz 6 des Lenkrads 1 verbinden.

Am Lenkrad 1 ist das Umkehrgetriebe in Form eines Planetengetriebes 10 angeordnet, das ein erstes zentrales Zahnrad 11, ein zweites zentrales Zahnrad 12, ein erstes peripheres Zahnrad 15 sowie ein zweites peripheres Zahnrad 16 aufweist. Das erste zentrale Zahnrad 11 ist koaxial mit der Lenkachse 3 des Lenkrads 1 auf der Seite der Nabe 7 des Lenkradbodens 2 fahrzeugfest angeordnet. Ebenfalls koaxial mit der Lenkachse 3 des Lenkrads 1 ist das zweite zentrale Zahnrad 12 auf der dem Fahrzeugführer zugewandten Seite des Lenkradbodens 2 am Modul 30 angeordnet. Das erste zentrale Zahnrad 11 steht mit dem zweiten zentralen Zahnrad 12 über eine Welle 14 in Wirkverbindung, die durch eine erste Öffnung 4 im Lenkradboden 2 des Lenkrads 1 geführt ist und parallel zur Lenkachse 3 verläuft. Das am ersten Ende der Welle 14 angeordnete erste periphere Zahnrad 15 greift in das erste zentrale Zahnrad 11 ein und das am zweiten Ende der Welle 14 angeordnete zweite periphere Zahnrad 16 greift in das zweite zentrale Zahnrad 12 ein, wodurch das erste zentrale Zahnrad 11 mit dem zweiten zentralen Zahnrad 12 gekoppelt ist.

Das erste zentrale Zahnrad 11 ist gemeinsam mit dem Stator 20a der ersten Baugruppe B1 drehfest mit einem fahrzeugfesten Teil des Kraftfahrzeugs verbunden, insbesondere mit einem Gehäuse 9 der Lenksäule oder einer Armatur des Kraftfahrzeugs. Das zweite zentrale Zahnrad 12 ist gemeinsam mit dem Stator 21 a der dritten Baugruppe B3 mit dem am Lenkrad 1 gelagerten und relativ zu diesem verdrehbaren Modul 30 drehfest verbunden, also gemeinsam mit diesem drehbar.

Bei einer Drehung des Lenkrads 1 wird die durch eine erste Öffnung 4 im Lenkradgrundkörper 2 des Lenkrads 1 geführt Welle 14 in Drehrichtung des Lenkrads 1 mitgenommen und das erste periphere Zahnrad 15 rollt auf dem fahrzeugfesten ersten zentralen Zahnrad 11 ab. Diese Drehbewegung des ersten peripheren Zahnrads 15 wird über die Welle 14 auf das zweite periphere Zahnrad 16 drehrichtungsgleich übertragen. Die Drehung des zweiten peripheren Zahnrads 16 wird seinerseits auf das hiermit kämmende zweite zentrale Zahnrad 12 übertragen, so dass die Drehbewegung des zweiten zentralen Zahnrades 12 zur Drehbewegung der peripheren Zahnräder 15, 16 und zur Drehbewegung des Lenkrades 1 gegenläufig ist. Im Ergebnis wird das mit dem zweiten zentralen Zahnrad 12 verbundene und zusammen mit diesem drehbar am Lenkrad 1 gelagerte Modul 30 relativ zum Lenkrad 1 in entgegengesetzter Richtung wie das Lenkrad 1 gedreht, wodurch das Modul 30 in Bezug auf die fahrzeugfesten Teile des Kraftfahrzeugs bei einer Drehbewegung des Lenkrades 1 eine konstante Winkellage beibehält.

Da das erste zentrale Zahnrad 11 und das zweite zentrale Zahnrad 12 sowie das erste periphere Zahnrad 14 und das zweite periphere Zahnrad 16 in der gezeigten Ausführungsform der Erfindung jeweils übereinstimmend ausgebildet sind, also jeweils den gleichen Durchmesser und insbesondere die gleiche Anzahl von Zähnen aufweisen, findet eine 1:1 Übertragung des Ausmaßes der Drehbewegung des Lenkrades 1 auf das zweite zentrale Zahnrad 12 statt, so dass der vom Lenkrad 1 und vom Modul 30 relativ zum Lenkrad 1 jeweils in entgegengesetzter Richtung durchlaufene Drehwinkel im Wesentlichen identisch ist.

Die in den Figuren dargestellte Lenkanordnung weist weiterhin eine erste elektrische Kontakteinheit 20 mit einem ersten Stator 20a, einem hierzu verdrehbaren ersten Rotor 20b und einer durch eine Leiterfolie gebildeten, Stator 20a und Rotor 20b elektrisch verbindenden ersten Wickelfeder 22 auf, wobei der erste Stator 20a zusammen mit dem ersten zentralen Zahnrad 11 an einem fahrzeugfesten Teil angeordnet und mit diesem fest verbunden ist. Eine zweite elektrische Kontakteinheit 21 umfasst einen zweiten Stator 21 a, einen hierzu verdrehbaren zweiten Rotor 21 b und eine durch eine Leiterfolie gebildete, Stator 21 a und Rotor 21 b elektrische verbindende zweiten Wickelfeder 23. Der zweite Stator 21a ist zusammen mit dem zweiten zentralen Zahnrad 12 am Modul 30 festgelegt und daher drehbar bezüglich des Lenkradgrundkörpers 2 des Lenkrads 1 gelagert. Die Rotoren 20b, 21 b beider Kotakteinheiten 20, 21 sind jeweils drehfest am Lenkrad 1, nämlich dessen Grundkörper 2, festgelegt.

Darüber hinaus sind elektrische Verbindungsmittel zur elektrischen Verbindung der ersten Wickelfeder 22 mit der zweiten Wickelfeder 23 vorgesehen. Diese Verbindungsmittel bestehen z.B. aus einer Steckverbindung oder einem flexiblen Leiter, die bzw. der eine hierfür vorgesehene zweite Öffnung im Lenkradboden 2 des Lenkrads 1 durchgreift und die beiden Rotoren 20b, 21 b elektrisch miteinander verbindet. Hierdurch können die am Modul 30 angeordneten Bedienelemente 24 zur Steuerung verschiedener elektrischer Funktionen im Fahrzeug mit dem elektrischen Netz des Fahrzeuges verbunden werden.

Sofern das Modul als Gassackmodul 30 ausgebildet ist, kann über die Wickelfedern 22, 23 außerdem eine Verbindung eines Zündelements für einen Gasgenerator mit der Bordelektrik des Fahrzeugs hergestellt werden, so dass im Crash-Fall eine Crash-Sensorik das Zündelement zur Zündung eines Gasgenerators ansteuern kann, um das Aufblasen und Entfalten des Gassackes herbeizuführen.

### Bezugszeichenliste

- 1: Lenkrad
- 2: Lenkradgrundkörper, Lenkradboden
- 3: Lenkachse
- 4: erste Öffnung im Lenkradgrundkörper
- 5: Lenkradspeichen.
- 6: Lenkradkranz
- 7: Lenkradnabe
- 9: Gehäuse der Lenksäule
- 10: (Planeten-) Getriebe
- 11: erstes Getriebeelement, erstes zentrales Zahnrad
- 12: zweites Getriebeelement; zweites zentrales Zahnrad
- 13: Getriebebaugruppe
- 14: Welle
- 15: erstes peripheres Zahnrad
- 16: zweites peripheres Zahnrad
- 17: Kugellager
- 20: erste elektrische Kontakteinheit
- 20a: erster Stator
- 20b: erster Rotor
- 21: zweite elektrische Kontakteinheit
- 21 a: zweiter Stator
- 21 b: zweiter Rotor
- 22: erste Wickelfeder
- 23: zweite Wickelfeder
- 24: elektrisches Element, Bedienelement
- B1: erste Baugruppe
- B2: zweite Baugruppe
- B3: dritte Baugruppe
- B4: vierte Baugruppe
- 30: (Gassack-) Modul
- 31: Befestigungsmittel
- 32: Stift
- 33: Abdeckung
- 34: Gassackvorrichtung

## Patentansprüche

1. Vorrichtung zur Lagerung eines Moduls an einem drehbaren Lenkrad eines Kraftfahrzeugs derart, dass die Winkellage des Moduls bei einer Drehung des Lenkrads konstant bleibt, mit
- einem Umkehrgetriebe,
- einem ersten Getriebeelement des Umkehrgetriebes, welches an einem fahrzeugfesten Teil des Kraftfahrzeugs festgelegt ist,
- einem zweiten Getriebeelement des Umkehrgetriebes, welches an dem Modul festgelegt und gemeinsam mit diesem drehbar ist, und
- einer durch Drehung des Lenkrads betätigbaren Getriebebaugruppe, über die das erste Getriebeelement mit dem zweiten Getriebeelement derart gekoppelt ist, dass eine Drehung des Lenkrads relativ zum ersten Getriebeelement entlang einer Drehrichtung in eine Drehung des mit dem zweiten Getriebeelement verbundenen Modules bezüglich des Lenkrades in entgegengesetzter Richtung umgesetzt wird,
- einer ersten elektrischen Kontakteinheit (20), die mit dem ersten Getriebeelement (11) zu einer Baugruppe (B1) zusammengefasst ist und mit dem fahrzeugfesten Teil in fester Verbindung steht,
- einer zweiten elektrischen Kontakteinheit (21), die mit dem zweiten Getriebeelement (12) zu einer Baugruppe (B3) zusammengefasst ist und mit dem Modul (30) in fester Verbindung steht, und
- elektrischen Verbindungsmitteln zur Verbindung der ersten elektrischen Kontakteinheit (20) mit der zweiten elektrischen Kontakteinheit (21),
wobei die erste und die zweite elektrische Kontakteinheit (20, 21) jeweils einen drehfest bezüglich des zugeordneten Getriebeelementes (11, 12) angeordneten Stator (20a, 21a) und einen hiermit elektrisch verbundenen und hierzu verdrehbaren, drehfest am Lenkrad angeordneten Rotor (20b, 21b) aufweisen, wobei der Rotor (20b) der ersten elektrischen Kontakteinheit (20) einerseits über den Stator (20a) an
das elektrische Netz eines Kraftfahrzeugs elektrisch anbindbar ist und andererseits über elektrische Verbindungsmittel mit dem Rotor (21 b) der zweiten Kontakteinheit (21) elektrisch verbindbar ist,
**dadurch gekennzeichnet, dass** ferner die jeweilige elektrische Kontakteinheit (20, 21) mit dem zugeordneten Getriebeelement (11, 12) fest verbunden ist, so dass die die erste elektrische Kontakteinheit (20) und das erste Getriebeelement (11) umfassende Baugruppe (B1) sowie die die zweite elektrische Kontakteinheit (21) und das zweite Getriebeelement (12) umfassende Baugruppe (B3) jeweils als eine außerhalb des Lenkrades komplett vormontierbare Baugruppe ausgebildet sind.

2. Vorrichtung nach Anspruch 1, **dadurch gekennzeichnet, dass** das erste Getriebeelement (11) und ein Element (20a) der ersten elektrischen Kontakteinheit (20) an einem Gehäuse (9) der Lenksäule oder einem Teil der Innenverkleidung des Kraftfahrzeugs festgelegt sind.

3. Vorrichtung nach Anspruch 1 oder 2, **dadurch gekennzeichnet, dass** das erste Getriebeelement (11) und ein Element (20a) der ersten elektrischen Kontakteinheit (20) im Bereich einer Nabe (7) des Lenkrads (1) fahrzeugfest angeordnet sind.

4. Vorrichtung nach einem der vorangehenden Ansprüche, **dadurch gekennzeichnet, dass** das zweite Getriebeelement (12) sowie ein Element (21a) der zweiten elektrischen Kontakteinheit (21) bezüglich des Lenkrads (1) drehbar am Modul (30) gelagert sind.

5. Vorrichtung nach einem der vorhergehenden Ansprüche, **dadurch gekennzeichnet, dass** jeweils ein Element (20b, 21 b) der ersten und der zweiten elektrischen Kontakteinheit (20, 21) drehfest mit dem Lenkrad (1) verbunden ist.

6. Vorrichtung nach Anspruch 5, **dadurch gekennzeichnet, dass** das drehfest mit dem Lenkrad (1) verbundene Element (20b) der ersten elektrischen Kontakteinheit (20) über einen flexiblen Leiter (22) elektrisch mit einem fahrzeugfesten Element (20a) der ersten elektrischen Kontakteinheit (20) verbunden ist und dass das drehfest mit dem Lenkrad (1) verbundene Element (21 b) der zweiten elektrischen Kontakteinheit (21) über einen flexiblen Leiter (23) elektrisch mit einem modulfesten Element (21a) der zweiten elektrischen Kontakteinheit (20) verbunden ist.

7. Vorrichtung nach einem der vorhergehenden Ansprüche, **dadurch gekennzeichnet, dass** die erste und/oder die zweite elektrische Kontakteinheit (20, 21) einen den Rotor (20b, 21b) mit dem Stator (20a, 20b) elektrisch verbindenden, beim Verdrehen des Rotors (20b, 21 b) bezüglich des Stators (20a, 21 a) auf- und abwickelbaren flexiblen Leiter (22, 23) aufweist.

8. Vorrichtung nach einem der vorhergehenden Ansprüche, **dadurch gekennzeichnet, dass** der Stator (20a, 21 a) der ersten und/oder zweiten elektrischen Kontakteinheit (20, 21) einstückig mit dem zugeordneten Getriebeelement (11, 12) geform ist.

9. Vorrichtung nach einem der vorhergehenden Ansprüche, **dadurch gekennzeichnet, dass** das erste Getriebeelement (11) und das zweite Getriebeelement (12) koaxial zur Lenkachse (3) des Lenkrades angeordnet sind.

10. Vorrichtung nach einem der vorhergehenden Ansprüche, **dadurch gekennzeichnet, dass** das Umkehrgetriebe als Planetengetriebe (10) ausgebildet ist.

11. Vorrichtung nach einem der vorhergehenden Ansprüche, **dadurch gekennzeichnet, dass** das erste Getriebeelement als erstes zentrales Zahnrad (11) und das zweite Getriebeelement als ein koaxial hierzu angeordnetes zweites zentrales Zahnrad (12) ausgebildet ist.

12. Vorrichtung nach einem der vorhergehenden Ansprüche, **dadurch gekennzeichnet, dass** die Getriebebaugruppe (13) zur Kopplung des ersten Getriebeelementes (11) mit dem zweiten Getriebeelement (12) eine parallel zur Lenkachse verlaufende Welle (14) aufweist.

13. Vorrichtung nach Anspruch 11 und 12, **dadurch gekennzeichnet, dass** das erste zentrale Zahnrad (11) mit dem zweiten zentralen Zahnrad (12) über eine parallel zur Lenkachse (3) verlaufende Welle (14) gekoppelt ist, wobei ein an der Welle (14) angeordnetes erstes peripheres Zahnrad (15) in das erste zentrale Zahnrad (11) eingreift und ein an der Welle (14) angeordnetes zweites peripheres Zahnrad (16) in das zweite zentrale Zahnrad (12) eingreift.

14. Vorrichtung nach Anspruch 12 oder 13, **dadurch gekennzeichnet, dass** die Welle (14) zur Kopplung des ersten Getriebeelements (11) mit dem zweiten Getriebeelement (12) durch eine Öffnung (4) im Lenkradgrundkörper (2) des Lenkrads (1) geführt ist.

15. Vorrichtung nach einem der vorangehenden Ansprüche, **dadurch gekennzeichnet, dass** das Umkehrgetriebe derart ausgebildet ist, dass bei einer Drehung des Lenkrades (1) um einen bestimmten Drehwinkel das am Lenkrad (1) drehbar gelagerte Modul (30) relativ zu dem Lenkrad (1) in entgegengesetzer Richtung um den betragsmäßig gleichen Winkel gedreht wird, so dass die Winkellage des Modules (30) bezüglich des fahrzeugfesten Teiles und des hieran festgelegten ersten Getriebeelementes (11) konstant bleibt.

16. Vorrichtung nach Anspruch 11, 13 und 15, **dadurch gekennzeichnet, dass** das erste und zweite zentrale Zahnrad (11, 12) sowie das erste und zweite periphere Zahnrad (15, 16) jeweils die gleiche Zähnezahl aufweisen.

17. Vorrichtung nach Anspruch 11, 13 und 15, **dadurch gekennzeichnet, dass** das erste und zweite zentrale Zahnrad (11, 12) sowie das erste und zweite periphere Zahnrad (15, 16) jeweils den gleichen Durchmesser aufweisen.

18. Vorrichtung nach einem der vorhergehenden Ansprüche, **dadurch gekennzeichnet, dass** die elektrische Verbindung der ersten elektrischen Kontakteinheit (20) mit der zweiten elektrischen Kontakteinheit (21) durch eine zweite Öffnung in einem Lenkradgrundkörper (2) des Lenkrads (1) erfolgt.

19. Vorrichtung nach einem der vorhergehenden Ansprüche, **dadurch gekennzeichnet, dass** die erste und zweite elektrische Kontakteinheit (20, 21) über eine Steckverbindung elektrisch miteinander verbunden sind.

20. Vorrichtung nach einem der vorhergehenden Ansprüche, **dadurch gekennzeichnet, dass** das Modul als ein Gassackmodul (30) ausgebildet ist, das einen im Crashfall aufblasbaren Gassack aufweist.

21. Vorrichtung nach einem der vorhergehenden Ansprüche, **dadurch gekennzeichnet, dass** am Modul (30) elektrischen Bauteile, insbesondere in Form durch einen Fahrzeugführer betätigbarer Bedienelemente (24) und/oder in Form eines Zündelement für einen Gasgenerator vorgesehen sind, die durch die zweite elektrische Kontakteinheit (21) elektrisch kontaktierbar sind.

22. Lenkrad für ein Kraftfahrzeug mit einem am Lenkrad (1) angeordneten Modul (30) und einer Vorrichtung zur Lagerung des Modules (30) am Lenkrad (1) nach einem der vorhergehenden Ansprüche.

## Claims

1. Device for mounting a module on a rotatable steering wheel of a motor vehicle in such a way that the angular position of the module remains constant if the steering wheel is rotated, having
- a reversing gear mechanism,
- a first gear mechanism element of the reversing gear mechanism which is fixed to a motor vehicle part which is mounted fixedly on the vehicle,
- a second gear mechanism element of the reversing gear mechanism which is fixed to the module and can be rotated jointly with the latter, and
- a gear mechanism assembly which can be actuated by rotation of the steering wheel and via which the first gear mechanism element is coupled to the second gear mechanism element in such a way that a rotation of the steering wheel relative to the first gear mechanism element in one direction of rotation is converted into a rotation of the module which is connected to the second gear mechanism element in the opposite direction with regard to the steering wheel,
- a first electrical contact unit (20) which is combined with the first gear mechanism element (11) to form an assembly (B1) and is connected fixedly to the part which is mounted fixedly on the vehicle,
- a second electrical contact unit (21) which is combined with the second gear mechanism element (12) to form an assembly (B3) and is connected fixedly to the module (30), and
- electrical connecting means for connecting the first electrical contact unit (20) to the second electrical contact unit (21),
wherein the first and the second electrical contact units (20, 21) have in each case a stator (20a, 21a) which is arranged fixedly in terms of rotation with regard to the associated gear mechanism element (11, 12) and a rotor (20b, 21b) which is connected electrically to the former and is arranged rotatably with respect to the former and fixed in terms of rotation on the steering wheel, it being possible for the rotor (20b) of the first electrical contact unit (20) firstly to be connected electrically to the electrical system of a motor vehicle via the stator (20a) and secondly to be connected electrically to the rotor (21b) of the second contact unit (21) via electrical connecting means,
**characterized in that**
further the respective electrical contact unit (20, 21) is fixedly connected to the associated gear mechanism element (11, 12) so that the assembly (B1) comprising the first electrical contact unit (20) and the first gear mechanism element (11) as well as the assembly (B3) comprising the second electrical contact unit (21) and the second gear mechanism element (12) are in each case configured as an assembly which can be completely preassembled outside the steering wheel.

2. Device according to Claim 1, **characterized in that** the first gear mechanism element (11) and an element (20a) of the first electrical contact unit (20) are fixed to a housing (9) of the steering column or a part of the interior trim of the motor vehicle.

3. Device according to Claim 1 or 2, **characterized in that** the first gear mechanism element (11) and an element (20a) of the first electrical contact unit (20) are arranged in a manner which is mounted fixedly on the vehicle in the region of a hub (7) of the steering wheel (1).

4. Device according to one of the preceding claims, **characterized in that** the second gear mechanism element (12) and an element (21a) of the second electrical contact unit (21) are mounted on the module (30) such that they can rotate with regard to the steering wheel (1).

5. Device according to one of the preceding claims, **characterized in that** in each case an element (20b, 21b) of the first and the second electrical contact units (20, 21) is connected fixedly in terms of rotation to the steering wheel (1).

6. Device according to Claim 5, **characterized in that** that element (20b) of the first electrical contact unit (20) which is connected fixedly in terms of rotation to the steering wheel (1) is connected electrically via a flexible conductor (22) to an element (20a) of the first electrical contact unit (20), which element (20a) is mounted fixedly on the vehicle, and **in that** that element (21b) of the second electrical contact unit (21) which is connected fixedly in terms of rotation to the steering wheel (1) is connected electrically via a flexible conductor (23) to an element (21a) of the second electrical contact unit (21), which element (21a) is mounted fixedly on the module.

7. Device according to one of the preceding claims, **characterized in that** the first and/or the second electrical contact unit (20, 21) have/has a flexible conductor (22, 23) which connects the rotor (20b, 21b) to the stator (20a, 21a) electrically and can be wound up and unwound when the rotor (20b, 21b) is rotated with regard to the stator (20a, 21a).

8. Device according to one of the preceding claims, **characterized in that** the stator (20a, 21a) of the first and/or second electrical contact unit (20, 21) is integrally formed with the associated gear mechanism element (11, 12).

9. Device according to one of the preceding claims, **characterized in that** the first gear mechanism element (11) and the second gear mechanism element (12) are arranged coaxially with respect to the steering axis (3) of the steering wheel.

10. Device according to one of the preceding claims, **characterized in that** the reversing gear mechanism is configured as a planetary gear mechanism (10).

11. Device according to one of the preceding claims, **characterized in that** the first gear mechanism element is configured as a first central gearwheel (11) and the second gear mechanism element is configured as a second central gearwheel (12) which is arranged coaxially with respect to said first central gearwheel (11).

12. Device according to one of the preceding claims, **characterized in that** the gear mechanism assembly (13) has a shaft (14) which extends parallel to the steering axis, for coupling the first gear mechanism element (11) to the second gear mechanism element (12).

13. Device according to Claims 11 and 12, **characterized in that** the first central gearwheel (11) is coupled to the second central gearwheel (12) via a shaft (14) which extends parallel to the steering axis (3), a first peripheral gearwheel (15) which is arranged on the shaft (14) engaging into the first central gearwheel (11) and a second peripheral gearwheel (16) which is arranged on the shaft (14) engaging into the second central gearwheel (12).

14. Device according to Claim 12 or 13, **characterized in that** the shaft (14) for coupling the first gear mechanism element (11) to the second gear mechanism element (12) is guided through an opening (4) in the steering wheel basic body (2) of the steering wheel (1).

15. Device according to one of the preceding claims, **characterized in that** the reversing gear mechanism is configured in such a way that, if the steering wheel (1) is rotated by a defined rotational angle, the module (30) which is mounted rotatably on the steering wheel (1) is rotated by the same amount of angle relative to the steering wheel (1) in the opposite direction, with the result that the angular position of the module (30) remains constant with regard to the part which is mounted fixedly on the vehicle and the first gear mechanism element (11) which is fixed to said part.

16. Device according to Claims 11, 13 and 15, **characterized in that** the first and second central gearwheels (11, 12) and the first and second peripheral gearwheels (15, 16) in each case have the same number of teeth.

17. Device according to Claims 11, 13 and 15, **characterized in that** the first and second central gearwheels (11, 12) and the first and second peripheral gearwheels (15, 16) in each case have the same diameter.

18. Device according to one of the preceding claims, **characterized in that** the first electrical contact unit (20) is connected electrically to the second electrical contact unit (21) via a second opening in a steering wheel basic body (2) of the steering wheel (1).

19. Device according to one of the preceding claims, **characterized in that** the first and second electrical contact units (20, 21) are connected to one another electrically via a plug-in connection.

20. Device according to one of the preceding claims, **characterized in that** the module is configured as an airbag module (30) which has an airbag which can be inflated in the case of a crash.

21. Device according to one of the preceding claims, **characterized in that** electrical components are provided on the module (30), in particular in the form of operating elements (24) which can be actuated by a vehicle driver and/or in the form of an ignition element for a gas generator, which electrical components can have electrical contact made with them by the second electrical contact unit (21).

22. Steering wheel for a motor vehicle, having a module (30) which is arranged on the steering wheel (1), and having a device for mounting the module (30) on the steering wheel (1) according to one of the preceding claims.

## Revendications

1. Dispositif pour le montage d'un module sur un volant de direction rotatif d'un véhicule automobile de telle façon que la position angulaire du module reste constante lors d'une rotation du volant de direction, comprenant :
- une transmission à inversion,
- un premier élément de transmission de la transmission à inversion, qui est immobilisé sur une partie solidaire du véhicule,
- un deuxième élément de transmission de la transmission à inversion, qui est immobilisé sur le module et capable de tourner conjointement avec celui-ci, et
- un sous-groupe de transmission susceptible d'être actionné par la rotation du volant de direction et via lequel le premier élément de transmission est couplé au deuxième élément de transmission de telle façon qu'une rotation du volant de direction par rapport au premier élément de transmission le long d'une direction de rotation est converti en une rotation du module relié au deuxième élément de transmission dans la direction opposée par rapport au volant de direction,
- une première unité de contact électrique (20), qui est regroupée avec le premier élément de transmission (11) en un groupe structurel (B1) et en liaison ferme avec la partie solidaire du véhicule,
- une deuxième unité de contact électrique (21) qui est regroupée avec le deuxième élément de transmission (12) en un groupe structurel (B3) et en liaison ferme avec le module (30), et
- des moyens de liaison électrique pour la liaison de la première unité de contact électrique (20) avec la deuxième unité de contact électrique (21),
où la première et la deuxième unité de contact électrique (20, 21) comprennent chacune un stator (20a, 21a), agencé solidairement en rotation par rapport à l'élément de transmission associé (11, 12), et un rotor (20b, 21b) relié électriquement au stator et capable de tourner par rapport à celui-ci, agencé solidairement en rotation sur le volant de direction, le rotor (20b) de la première unité de contact électrique (20) pouvant être relié électriquement d'une part via le stator (20a) au réseau électrique d'un véhicule automobile, et d'autre part via des organes de raccordement électriques au rotor (21 b) de la deuxième unité de contact (21),
**caractérisé en ce que**
de plus la respective unité de contact électrique (20, 21) est solidairement reliée à l'élément de transmission associé (11, 12) de telle sorte que le groupe structurel (B1) comprenant la première unité de contact électrique (20) et le premier élément de transmission (11) ainsi que le groupe structurel (B3) comprenant la deuxième unité de contact électrique (21) et le deuxième élément de transmission (12) sont respectivement réalisés sous forme d'un groupe structurel qui peut complètement pré-assemblé au-dehors du volant.

2. Dispositif selon la revendication 1, **caractérisé en ce que** le premier élément de transmission (11) et un élément (20a) de la première unité de contact électrique (20) sont immobilisés sur un boîtier (9) de la colonne de direction ou sur une partie de l'habillage intérieur du véhicule automobile.

3. Dispositif selon la revendication 1 ou 2, **caractérisé en ce que** le premier élément de transmission (11) et un élément (20a) de la première unité de contact électrique (20) sont agencés de façon solidaire du véhicule dans la région d'un moyeu (7) du volant de direction (1).

4. Dispositif selon l'une des revendications précédentes, **caractérisé en ce que** le deuxième élément de transmission (12), ainsi qu'un élément (21a) de la deuxième unité de contact électrique (20) sont montés sur module (30) avec possibilité de rotation par rapport au volant de direction (1).

5. Dispositif selon l'une des revendications précédentes, **caractérisé en ce qu'**un élément respectif (20b, 21 b) de la première et de la deuxième unité de contact électrique (20, 21) est relié solidairement en rotation au volant de direction (1).

6. Dispositif selon la revendication 5, **caractérisé en ce que** l'élément (20b), relié solidairement en rotation au volant de direction (1), de la première unité de contact électrique (20) est relié via une ligne flexible (22) électriquement à un élément (20a), solidaire du véhicule, de la première unité de contact électrique (20), et **en ce que** l'élément (21 b), relié solidairement en rotation au volant de direction (1), de la deuxième unité de contact électrique (21) est relié via une ligne flexible (23) électriquement à un élément (21a), solidaire du module, de la deuxième unité de contact électrique (20).

7. Dispositif selon l'une des revendications précédentes, **caractérisé en ce que** la première et/ou la deuxième unité de contact électrique (20, 21) comprend une ligne flexible (22, 23), qui établit une liaison électrique du rotor (20b, 21b) avec le stator (20a, 21a) et qui est susceptible de s'enrouler et de se dérouler lors de la rotation du rotor (20b, 21b) par rapport au stator (20a, 21a).

8. Dispositif selon l'une des revendications précédentes, **caractérisé en ce que** le stator (20a, 21 a) de la première et/ou de la deuxième unité de contact électrique (20, 21) est formé d'une seule pièce avec l'élément de transmission (11, 12) associé.

9. Dispositif selon l'une des revendications précédentes, **caractérisé en ce que** le premier élément de transmission (11) et le deuxième élément de transmission (12) sont agencés coaxialement par rapport à l'axe (3) du volant de direction.

10. Dispositif selon l'une des revendications précédentes, **caractérisé en ce que** la transmission réversible est réalisée sous forme de transmission à planétaires (10).

11. Dispositif selon l'une des revendications précédentes, **caractérisé en ce que** le premier élément de transmission est réalisé sous forme de première roue dentée centrale (11), et le deuxième élément de transmission est réalisé sous forme de deuxième roue dentée centrale (12) agencée coaxialement à celle-ci.

12. Dispositif selon l'une des revendications précédentes, **caractérisé en ce que** le groupe structurel de transmission (13) comprend, pour le couplage du premier élément de transmission (11) avec le deuxième élément de transmission (12), un arbre (14) qui s'étend parallèlement à l'axe de direction.

13. Dispositif selon la revendication 11 et 12, **caractérisé en ce que** la première roue dentée centrale (11) est accouplée à la deuxième roue dentée centrale (12) via un arbre (14) qui s'étend parallèlement à l'axe de direction (3), une première roue dentée périphérique (15) agencée sur l'arbre (14) s'engageant dans la première roue dentée centrale (11) et une deuxième roue dentée périphérique (16) agencée sur l'arbre (14) s'engageant dans la deuxième roue dentée centrale (12).

14. Dispositif selon la revendication 12 ou 13, **caractérisé en ce que** l'arbre (14), pour l'accouplement du premier élément de transmission (11) avec le deuxième élément de transmission (12), est passé à travers une ouverture (4) dans le corps de base (2) du volant de direction (1).

15. Dispositif selon l'une des revendications précédentes, **caractérisé en ce que** la transmission à inversion est réalisée de telle manière que lors d'une rotation du volant de direction (1) d'un certain angle de rotation, le module (30) monté en rotation sur le volant de direction (1) est tourné en sens opposé d'un angle de valeur égale, de sorte que la position angulaire du module (30) reste constante par rapport à la partie solidaire du véhicule et au premier élément de transmission (11) fixé sur cette partie.

16. Dispositif selon la revendication 11, 13 et 15, **caractérisé en ce que** la première et la deuxième roue dentée centrale (11, 12) ainsi que la première et la deuxième roue dentée périphérique (15, 16) présentent respectivement le même nombre de dents.

17. Dispositif selon la revendication 11, 13 et 15, **caractérisé en ce que** la première et la deuxième roue dentée centrale (11, 12) ainsi que la première et la deuxième roue dentée périphérique (15, 16) présentent respectivement le même diamètre.

18. Dispositif selon l'une des revendications précédentes, **caractérisé en ce que** la liaison électrique de la première unité de contact électrique (20) avec la deuxième unité de contact électrique (21) a lieu à travers une deuxième ouverture dans un corps de base (2) du volant de direction (1).

19. Dispositif selon l'une des revendications précédentes, **caractérisé en ce que** la première et la deuxième unité de contact électrique (20, 21) sont reliées l'une à l'autre sur le plan électrique via une liaison à enfichage.

20. Dispositif selon l'une des revendications précédentes, **caractérisé en ce que** le module est réalisé sous forme de module de sac à gaz (30) qui comprend un sac à gaz gonflable en cas de collision.

21. Dispositif selon l'une des revendications précédentes, **caractérisé en ce qu'**il est prévu sur le module (30) des composants électriques, en particulier sous la forme d'éléments d'actionnement (24) susceptibles d'être actionnés par un conducteur du véhicule et/ou sous la forme d'un élément d'allumage pour un générateur de gaz, qui peuvent être mis en contact électrique au moyen de la deuxième unité de contact électrique (21).

22. Volant de direction pour un véhicule automobile, comprenant un module (30) agencé sur le volant de direction (1), et un dispositif pour le montage du module (30) sur le volant de direction (1) selon l'une des revendications précédentes.
